# EUROPEAN PATENT APPLICATION

(11) **EP 2 869 461 A1**
(43) Date of publication of application: **06.05.2015**
(21) Application number: 14190799.8
(22) Date of filing: 29.10.2014
(51) Int. Cl.: H02P 21/00

(54) **Motor controller**

(30) Priority: 01.11.2013 JP 2013228550
(71) Applicant: Kabushiki Kaisha Yaskawa Denki, Kitakyushu-shi, Fukuoka 806-0004 (JP)
(72) Inventor: Oga, Sohei, Kitakyushu-shi, Fukuoka 806-0004 (JP); Nonaka, Tsuyoshi, Kitakyushu-shi, Fukuoka 806-0004 (JP); Ishii, Takaaki, Kitakyushu-shi, Fukuoka 806-0004 (JP)
(74) Representative: Viering, Jentschura & Partner Patent- und Rechtsanwälte

(57) **Abstract**

A motor controller (1) configured to control a driving of an AC motor (M) includes a voltage instruction value calculation part (11) configured to calculate a voltage instruction value (V1), a voltage limit value generation part (12) configured to generate an efficient voltage limit value (Vlimit) at which a power conversion efficiency (η) becomes substantially the maximum corresponding to a drive characteristic of the motor (M), and a subtractor (15), a voltage limit part (13), and an adder (14) configured to adjust a d-axis current (Id) on the basis of a deviation between the efficient voltage limit value (Vlimit) and the voltage instruction value (V1), and the voltage limit value generation part (12) is configured to generate the efficient voltage limit value (Vlimit) on the basis of a voltage limit value map storing a correlation between a torque instruction (Tref) and a motor rotation speed (ω) which are parameters related to an output of the motor (M) and the efficient voltage limit value (Vlimit) at which the power conversion efficiency (η) becomes substantially the maximum corresponding to these parameters.

## Description

### TECHNICAL FIELD

The disclosed embodiment relates to a motor controller.

### BACKGROUND ART

A technology of constant output control is described in JP, B, 3686987. In the prior art, a driving of a motor is stabilized by having a d-axis current flow in accordance with an increasing/decreasing change of an input voltage so as to perform field weakening in a high speed rotation of a motor.

### DISCLOSURE OF THE INVENTION

### Problem to be solved by the Invention

However, with such constant output control, only the input voltage in high-speed rotation is maintained at the maximum at all the times, and input power expressed by a product of the input voltage and an input current to the motor is apt to become larger. Thus, regarding the above-described constant output control, there is a room for improvement from the viewpoint of power conversion efficiency of motor output with respect to the input power.

The present disclosure was made in view of those problems and has an object to provide a motor controller which can stably drive the motor with high efficiency even in high-speed rotation.

### Means for Solving the Problem

In order to achieve the above-described object, according to one aspect of the disclosure, there is provided a motor controller configured to control a driving of an AC motor, characterized in that the motor controller comprises a voltage calculation part configured to calculate a voltage instruction value, a voltage limit value generation part configured to generate a first voltage limit value at which a power conversion efficiency becomes substantially the maximum corresponding to a drive characteristic of the motor, and a d-axis current adjustment part configured to adjust a d-axis current on the basis of a deviation between the first voltage limit value and the voltage instruction value.

Moreover, according to another aspect of the disclosure, there is provided a motor controller configured to control a driving of an AC motor, comprising a voltage calculation part configured to calculate a voltage instruction value, a voltage limit value generation part configured to generate a first voltage limit value at which a power conversion efficiency becomes substantially the maximum corresponding to a drive characteristic of the motor, and a d-axis current adjustment part configured to adjust a d-axis current on the basis of a deviation between the first voltage limit value and the voltage instruction value, the voltage limit value generation part being configured to generate the first voltage limit value on the basis of a voltage limit value map storing a correlation between a torque instruction value and a motor rotation speed and the first voltage limit value at which the power conversion efficiency becomes substantially the maximum corresponding to the torque instruction value and the motor rotation speed.

### Advantages of the Invention

According to the present disclosure, the motor can be driven stably with high efficiency even in high-speed rotation.

### BRIEF DESCRIPTION OF THE DRAWING

Fig. 1 is a functional block diagram of a motor controller according to a first embodiment.
Fig. 2 is a functional block diagram of a motor controller of a first comparative example for performing prior-art constant output control.
Fig. 3 is a chart illustrating a relationship among an input power, an input voltage, and a d-axis current in the first comparative example.
Fig. 4 is a chart illustrating a relationship among an input power, an input voltage, and a d-axis current in a second comparative example.
Fig. 5 is a chart illustrating a relationship among input power, an input voltage, and a d-axis current in the first embodiment.
Fig. 6 illustrates a section orthogonal to an axis in one example of a variable field motor.
Fig. 7A is an appearance perspective view of a rotor in one example of the variable field motor.
Fig. 7B is an appearance perspective view of a rotor in one example of the variable field motor.
Fig. 8 is a functional block diagram of a motor controller according to a second embodiment.
Fig. 9 is a chart illustrating a relationship among an input power, an input voltage, and a d-axis current in a third embodiment.
Fig. 10 is a functional block diagram of the motor controller according to the third embodiment.

### BEST MODE FOR CARRYING OUT THE INVENTION

### <Basic configuration of first embodiment>

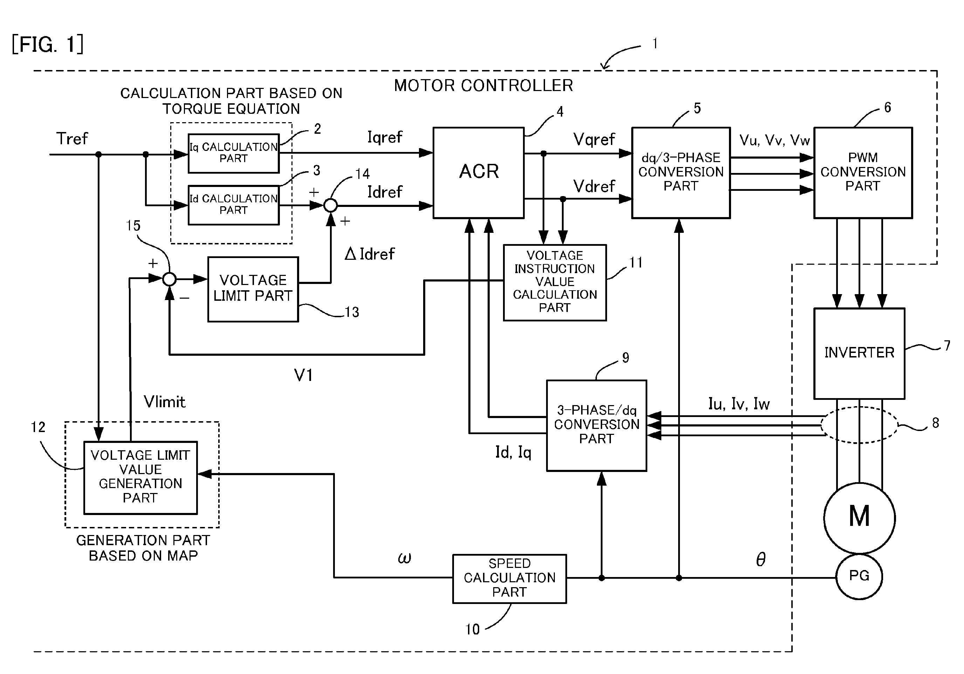

An embodiment will be explained below by referring to the attached drawings. Fig. 1 illustrates a functional block diagram of a motor controller according to a first embodiment. In this Fig. 1, an Iq calculation part 2, an Id calculation part 3, an ACR 4, a dq/three-phase conversion part 5, a PWM conversion part 6, an inverter 7, a current detection part 8, a motor M, an encoder PG, a three-phase/dq conversion part 9, a speed calculation part 10, a voltage instruction value calculation part 11, a voltage limit value generation part 12, a voltage limit part 13, an adder 14, and a subtractor 15 are illustrated. Among them, a constitution part excluding the inverter 7, the motor M, and the encoder PG constitutes a motor controller 1 of this embodiment.

The Iq calculation part 2 and the Id calculation part 3 calculate a q-axis current instruction Iqref of a q-axis component largely affecting generation of torque of the motor M and a d-axis current instruction Idref of a d-axis component largely affecting excitation from the same torque instruction Tref inputted respectively. These calculations are made on the basis of the respective calculation formulas. The q-axis current instruction Iqref is inputted into the ACR 4 as it is, and the d-axis current instruction Idref is inputted into the ACR 4 after being added by the adder 14 with an output of the voltage limit part 13 which will be described later. Depending on a type of the motor M (such as an IPM motor, for example), the d-axis current instruction Idref may also have some influence on the torque.

The ACR 4 has a function as a current control part for receiving inputs of the above-described q-axis current instruction Iqref and the d-axis current instruction Idref and also receiving inputs of a detection q-axis current value Iq and a detection d-axis current value Id from the three-phase/dq conversion part 9 which will be described later, and outputting a q-axis voltage instruction Vqref and a d-axis voltage instruction Vdref on the basis of the deviation between them corresponding to each of the axes.

The dq/three-phase conversion part 5 coordinate-converts the above-described q-axis voltage instruction Vqref and the d-axis voltage instruction Vdref to a three-phase voltage instruction of a U-phase voltage instruction Vu, a V-phase voltage instruction Vv and a W-phase voltage instruction Vw on the basis of a rotation position θ of the motor M detected from the encoder PG which will be described later.

The PWM conversion part 6 outputs a PWM drive signal corresponding to each phase by PWM conversion based on comparison between the above-described three-phase voltage instructions Vu, Vv, Vw and a carrier wave (triangular wave) generated inside.

The inverter 7 converts a supply power from an external power source, not particularly shown, to a drive power of each phase by PWM control and feeds it to the motor M by a switching operation based on the above-described PWM drive signal corresponding to each phase.

The current detection part 8 detects drive current values Iu, Iv, Iw of the drive power of each phase fed from the inverter 7, respectively.

The motor M is a rotary three-phase AC motor in an example in this embodiment and is driven by the drive power of each phase fed from the inverter 7. Regarding this motor M, a linear motion type can be also applied in addition to the rotary type.

The encoder PG includes an optical rotary encoder or the like, for example, and detects the rotation position θ of the motor M. If the motor M is of a linear motion type, a driving position of a mover of the motor M is detected by using a linear scale or the like, for example.

The three-phase/dq conversion part 9 coordinate-converts the drive current values Iu, Iv, Iw of each phase detected by the current detection part 8 to the detection q-axis current value Iq and the detection d-axis current value Id on the basis of the rotation position θ of the motor M detected from the encoder PG. Moreover, as described above, the ACR 4 outputs the q-axis voltage instruction Vqref and the d-axis voltage instruction Vdref on the basis of a deviation between the q-axis current instruction Iqref and the d-axis current instruction Idref based on the torque instruction Tref and the detection q-axis current value and the detection d-axis current value Id actually inputted into the motor M. As a result, the ACR 4, the dq/three-phase conversion part 5, the PWM conversion part 6, the inverter 7, the current detection part 8, and the three-phase/dq conversion part 9 constitute a feedback loop for current control (torque control), and control the current actually inputted into the motor M so as to follow correspondingly the value of the torque instruction Tref. Though not particularly shown, the torque instruction Tref may be directly inputted from a master controller or, a feedback loop for speed control or a feedback loop for position control may be further provided so that the input is made from them.

The voltage instruction value calculation part 11 calculates, on the basis of the q-axis voltage instruction Vqref and the d-axis voltage instruction Vdref outputted by the ACR 4, a voltage instruction value V1 corresponding to an instruction value of the input voltage into the motor M obtained by combining a q-axis component and a d-axis component thereof. This voltage instruction value calculation part 11 corresponds to the voltage calculation part described in each claim.

The speed calculation part 10 calculates a rotation speed ω of the motor M on the basis of the rotation position θ of the motor M detected by the encoder PG. As specific calculation contents, the motor rotation speed ω is calculated by differentially operating the motor rotation position θ.

The voltage limit value generation part 12 generates an efficient voltage limit value

Vlimit on the basis of the motor rotation speed ω calculated by the speed calculation part 10 and the torque instruction Tref. Contents and a generation method of this efficient voltage limit value Vlimit will be described later in detail. Moreover, this efficient voltage limit value Vlimit corresponds to a first voltage limit value described in each claim.

The subtractor 15 calculates a deviation between the efficient voltage limit value Vlimit generated by the voltage limit value generation part 12 and the voltage instruction value V1 calculated by the voltage instruction value calculation part 11.

The voltage limit part 13 outputs a d-axis current adjustment signal ΔIdref on the basis of the deviation calculated by the subtractor 15 and adds this only to the d-axis current instruction Idref by the adder 14. As a result, constant output control in which the d-axis current instruction Idref is adjusted in accordance with an increasing/decreasing change of the input voltage in high-speed rotation of the motor M and driving of the motor M is made stable can be realized. The constant output control will be described later in detail. Moreover, the subtractor 15, the voltage limit part 13, and the adder 14 correspond to a d-axis current adjustment part described in each claim.

As described above, in the motor controller 1 of this embodiment, by executing dq-axes vector control in which a current instruction corresponding to the torque instruction Tref is divided into the d-axis current instruction Idref and the q-axis current instruction Iqref, the AC motor M can be functionally controlled equally to a linear motor with relatively simple control configuration.

### <Comparison with prior-art type: First comparative example>

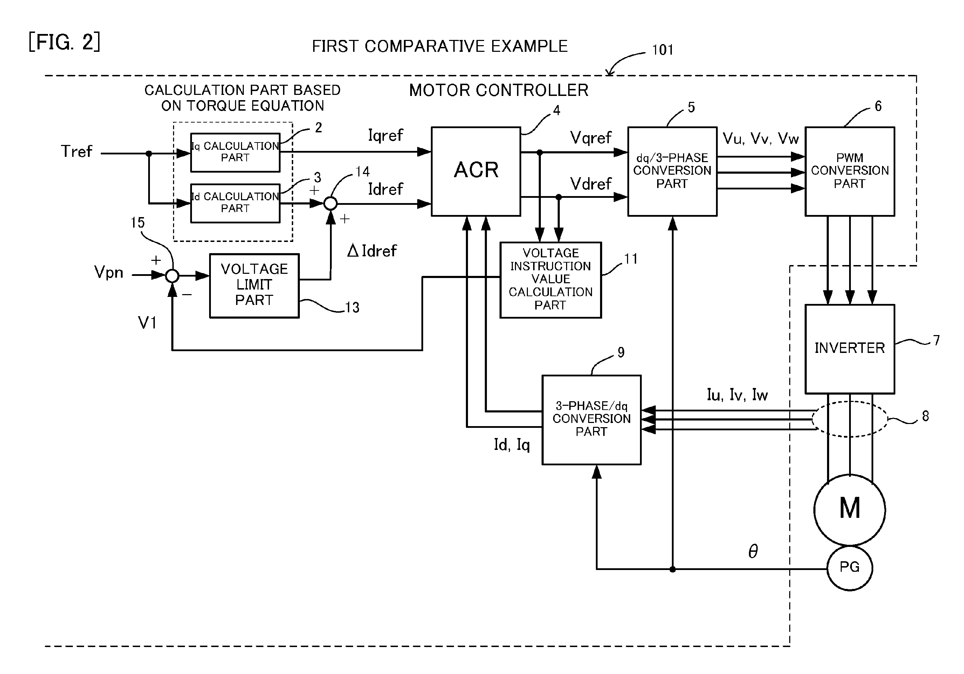

Here, two prior-art motor controllers are illustrated as comparative examples, and a function of the motor controller 1 of the above-described embodiment will be explained in comparison with them. Fig. 2 illustrates a functional block diagram of a motor controller 101 of a first comparative example which performs prior-art constant output control.

The prior-art motor controller 101 illustrated in this Fig. 2 is different from the motor controller 1 of this embodiment illustrated in Fig. 1 in a point that the speed calculation part 10 and the voltage limit value generation part 12 are not disposed, and a saturated voltage limit value Vpn set fixedly in advance is used instead of the efficient voltage limit value Vlimit. Since the other configurations are equal to those of the motor controller 1 of this embodiment, explanation will be omitted.

In general, an induced voltage acting as a counter electromotive voltage by rotation is generated internally in the motor M, and in high-speed rotation at a predetermined speed or above, most of the input voltage is offset by the induced voltage, and a current cannot be made to flow through windings and thus, the torque cannot be raised any more. However, by having the d-axis current Id flow in such voltage saturation, the current can be made to flow through the windings by generating a magnetic flux in an opposite direction in the core for offset (so-called field weakening), and thus, the motor can be rotated at a higher speed. That is, the d-axis component does not give direct contribution to the driving of the motor M in usual, but by controlling the d-axis current instruction Idref in accordance with the increasing/decreasing change of the input voltage in high-speed rotation, constant output control for stabilizing driving of the motor M can be realized.

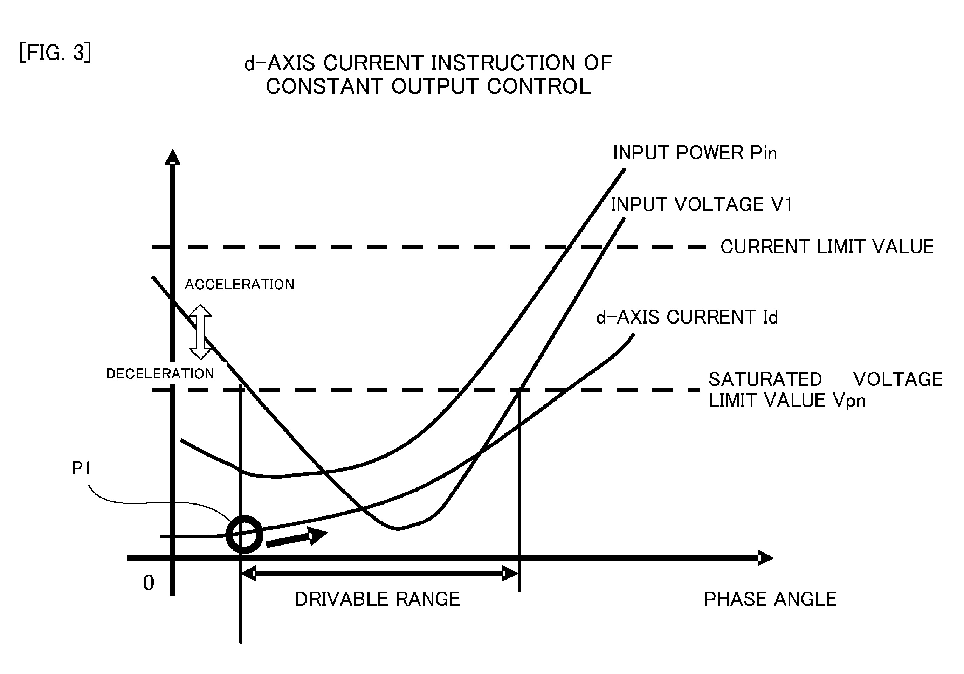

A specific method of this constant output control will be explained by using Fig. 3. Fig. 3 is a chart illustrating changes of the input power Pin, the input voltage V1, and the d-axis current Id with respect to a change of a phase angle. The phase angle is a phase angle of an input power vector in the dq-axes coordinate, and the larger the phase angle is, the more a ratio of the d-axis current Id to the q-axis current increases, that is, the d-axis current Id monotonically increases slowly. As a result, an increase/decrease of the phase angle in a relatively small range can be regarded as substantially equal to the increase/decrease of the d-axis current Id.

The input power Pin is an input power into the motor M virtually calculated on the basis of each instruction inside the motor controller 101 and can be expressed by a calculation formula Pin = VIcosδ (δ is a phase difference of a current and a voltage of the input power Pin). This input power Pin has, as illustrated, a characteristic in which it has a minimum value at a certain phase angle and the input power Pin increases in a vertically inverted substantially parabolic curve with respect to a change for increasing or decreasing the phase angle. Moreover, with respect to this input power Pin, a value obtained by converting a mechanical work load actually outputted from the motor M to a power value corresponds to an output power Pout (not particularly shown) and can be expressed by a calculation formula of Pout = T · N (T is an output torque, N is a motor rotation speed (= ω). The ratio Pout/Pin of the output power Pout to the input power Pin corresponds to a power conversion efficiency η in the motor M, that is, the higher this power conversion efficiency η is, with the less input power Pin, the desired motor output can be drawn.

The input voltage V1 is a voltage to be inputted into the motor M and is equal to the voltage instruction value V1 calculated by the voltage instruction value calculation part 11. This input voltage V1 has, as illustrated, a characteristic of changing from a monotonic decrease to a monotonic increase in a substantially V-shape with respect to the increase of the phase angle. This characteristic is generated since, though the input voltage V1 can be monotonically decreased by increasing an effect of field weakening by the increase of the d-axis current Id as described above, if the d-axis current Id is increased exceeding a limit point (a change point of the substantially V-shaped curve), the input voltage V1 is monotonically increased to the contrary. Moreover, this input voltage V1 also has a characteristic in which, if the motor rotation speed ω (motor rotation speed N) increases, the substantially V-shaped curve moves upward as a whole as it is, and the input voltage V1 equally increases over the entire range of the phase angle.

The saturated voltage limit value Vpn set in the prior-art motor controller 101 corresponds to a threshold value at which a voltage saturated state is generated by offset of the input voltage V1 by an induced voltage inside the motor M described above, and if the input voltage V1 exceeds the threshold value, the driving of the motor M becomes instable with respect to fluctuation of the torque even during a constant-speed rotation. That is, only within a phase-angle range in which the input voltage V1 becomes the saturated voltage limit value Vpn or less is a drivable range in which the motor M can be driven stably. This saturated voltage limit value Vpn is a parameter usually determined by a power voltage supplied to the inverter 7. This saturated voltage limit value Vpn corresponds to a second voltage limit value described in each claim.

Here, in the above-described dq-axes vector control, the input voltage V1 can be balanced while the motor rotation speed ω is maintained by adjusting the d-axis current Id. That is, in the chart in Fig. 3, if the motor rotation speed N is constant as a premise (if a vertical position of the substantially V-shaped curve corresponding to the input voltage V1 is constant), the above-described effect of field weakening is adjusted by increasingly/decreasingly changing the phase angle (increasingly/decreasingly changing the d-axis current Id), the motor M can be maintained in the state within the above-described drivable range. Specifically, as illustrated in Fig. 3, it is only necessary that the d-axis current Id is adjusted so that it becomes a value corresponding to a point P1 located within the drivable range and particularly within a monotonic decrease range (within weakening field effective range) of the substantially V-shaped curve of the input voltage V1.

In order to make such adjustment of the d-axis current Id, in the prior-art motor controller 101 illustrated in Fig. 2, the voltage limit part 13 outputs the d-axis current adjustment signal ΔIdref on the basis of the deviation between the saturated voltage limit value Vpn which is a fixed value and the voltage instruction value V1 and adds the d-axis current adjustment signal ΔIdref to the d-axis current instruction Idref by the adder 14. Regarding processing inside the voltage limit part 13, it is only necessary that so-called PID control or the like is executed so that the deviation is made smaller by using an appropriate gain or feed-forward, for example. With this configuration, even if the motor rotation speed changes and the vertical position of the curve of the input voltage V1 in Fig. 3 changes, the d-axis current Id is adjusted so that the point P1 falls within the drivable range (the input voltage V1 is at the saturated voltage limit value Vpn or less) at all times. That is, even in high-speed rotation, the constant output control in which the driving of the motor M can be made stable in accordance with the increasing/decreasing change of the input voltage V1 can be realized.

However, in the above-described prior-art constant output control, only the input voltage V1 in the high-speed rotation is maintained at the maximum value within the drivable range (that is, substantially equal to the saturated voltage limit value Vpn) at all times, and the input power Pin expressed by a product of the input voltage V1 and the input current into the motor M is apt to become larger. Thus, in the above-described constant output control, there was a room for improvement from the viewpoint of the power conversion efficiency η (=Pout/Pin) of the output power Pout with respect to the input power Pin.

### <Comparison with prior-art type: Second comparative example>

Subsequently, a motor controller of a second comparative example for performing prior-art map control as a method for optimizing the power conversion efficiency η will be explained.

The motor controller 201 of the second comparative example is different from the motor controller 1 of this embodiment illustrated in Fig. 1 in a point that the Id calculation part 3, the voltage instruction value calculation part 11, the voltage limit value generation part 12, and the voltage limit part 13 are not disposed, and the d-axis current instruction generation part for generating the d-axis current instruction Idref by map control based on the torque instruction Tref and the motor rotation speed ω is disposed instead of the Id calculation part 3 (not shown). Since the other configurations are equal to those of the motor controller 1 of this embodiment, the explanation will be omitted.

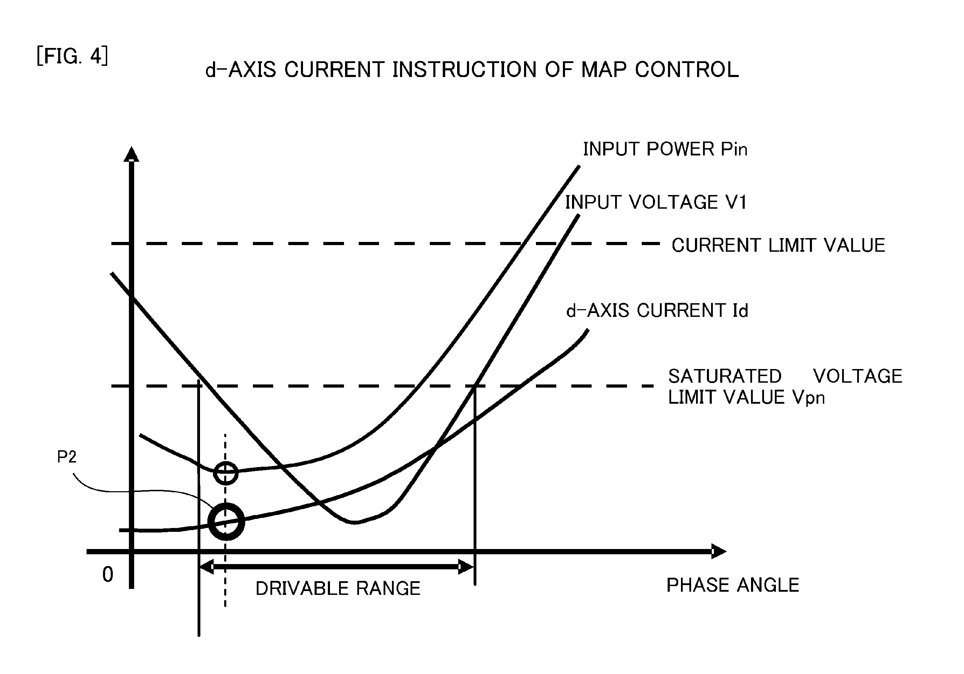

A specific method of this map control will be explained by using Fig. 4 corresponding to Fig. 3. As described above, the power conversion efficiency η is expressed by the ratio Pout/Pin of the output power Pout to the input power Pin. Thus, by keeping the input power Pin (=VIcosδ; denominator) required for drawing the desired output power Pout (=T · N; numerator) as small as possible, the power conversion efficiency η can be improved. Moreover, as described above, the input power Pin has a characteristic of an inverted parabolic curve shape having a minimum value at a certain phase angle with respect to the change of the phase angle (a change of the d-axis current Id).

In this second comparative example, the d-axis current Id (see a point P2 in the figure) corresponding to the phase angle at which this input power Pin becomes the minimum value is set as a pin point, and the dq-axes vector control is performed by using the d-axis current instruction Idref corresponding to the set d-axis current Id. That is, by appropriately setting the d-axis current Id not much affecting the torque in many cases, the desired output power Pout can be obtained while the input power Pin is kept to the minimum value, and a good balance can be realized so that the power conversion efficiency η can be improved.

In order to realize such setting of the d-axis current Id, in the prior art motor controller 201 illustrated in Fig. 4, the above-described d-axis current instruction generation part generates the appropriate d-axis current instruction Idref on the basis of the torque instruction Tref and the motor rotation speed ω and outputs it to the ACR 4. Here, the increase/decrease characteristic of the input power Pin (the characteristic indicated by the entire shape or arrangement of the inverted parabolic curve) with respect to the change of the phase angle as illustrated in the figure changes in accordance with the change in the output of the motor M. Thus, the minimum value of the input power Pin also changes in accordance with the motor output but a relationship between them depends on the mechanical characteristic and the electric characteristic of the motor M to be controlled and is a complicated relationship not falling under a simple calculation formula in many cases.

Thus, in the second comparative example, the d-axis current instruction generation part includes a d-axis current map therein and generates the appropriate d-axis current instruction Idref by referring to the d-axis current map. This d-axis current map uses parameters related to the motor output as key variables and stores correlation with the d-axis current instruction Idref which can make the input power Pin the minimum value corresponding to the parameters. As a specific example in the second comparative example, orthogonal coordinates are taken by two parameters, that is, the torque T and the motor rotation speed N, and the d-axis current map is constituted by a two-dimensional table storing the d-axis current instruction Idref which can make the input power Pin the minimum value corresponding to the combination of the two parameters (not particularly shown). In the second comparative example, the d-axis current map is referred to by using the torque instruction Tref instead of detection of the torque T actually outputted by the motor M.

However, with the prior-art map control, since the d-axis current instruction Idref is set in a semi-fixed manner, the d-axis current Id might be deviated from the drivable range. For example, as described above, if the motor rotation speed N is raised, the entire characteristic curve (substantially V-shaped curve) of the input voltage V1 moves upward to narrow the phase angle range where the input voltage V1 is equal to or below the saturated voltage limit value Vpn, that is, the drivable range, and thus, more strict setting accuracy of the d-axis current Id is required. However, if a manufacture error depending on a lot of the motor M or a characteristic error caused by an actual operation such as a temperature change during the operation occurs with respect to contents of the d-axis current map set by a theoretical value on a design of the motor M to be controlled, it is likely that such errors cannot be handled, and the d-axis current Id is deviated from the drivable range, thus making the driving of the motor M instable. To cope with this situation, such measures can be considered that a d-axis current map is produced by including parameters capable of assuming occurrence of an error, but if the map is produced by a multi-dimensional table by increasing parameters which become coordinates of the map as above, huge map data becomes necessary.

### <Features of First embodiment>

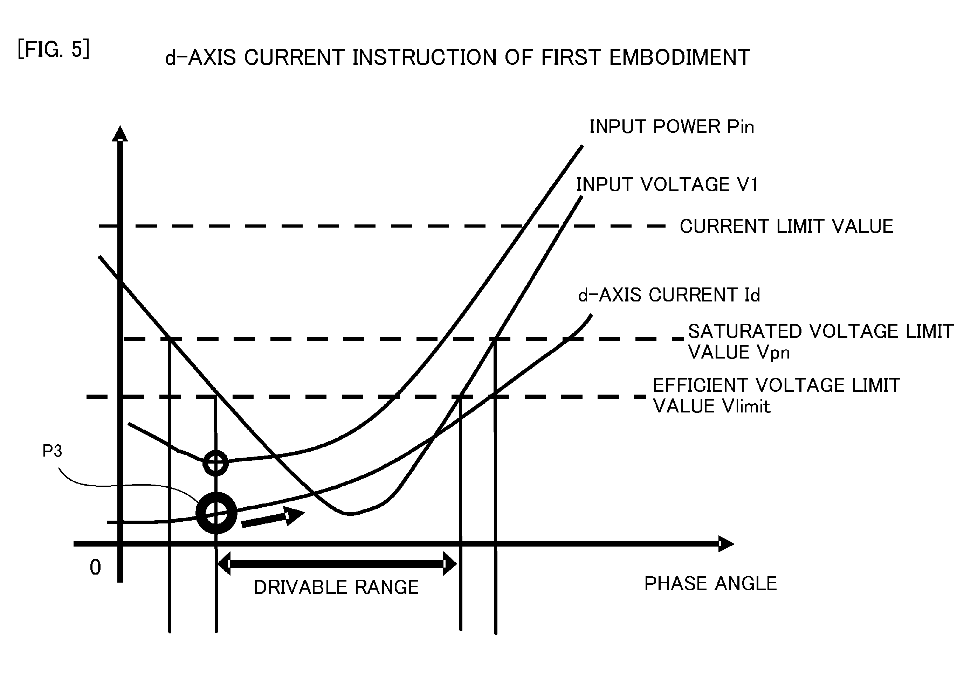

With respect to the above-described two prior-art comparative examples, the drive control of the motor M is performed by the following method in this embodiment. That is, as illustrated in Fig. 5 corresponding to Figs. 3 and 4, the input voltage V1 corresponding to the phase angle at which the input power Pin becomes the minimum value is set as the efficient voltage limit value Vlimit. Then, the constant output control is performed on the basis of this efficient voltage limit value Vlimit instead of the saturated voltage limit value Vpn (see a point P3 in the figure).

Specifically, in the motor controller 1 of this embodiment illustrated in Fig. 1, the voltage limit value generation part 12 generates the efficient voltage limit value Vlimit at which the power conversion efficiency η becomes substantially the maximum on the basis of the torque instruction Tref and the motor rotation speed ω. Then, the voltage limit part 13 adjusts the d-axis current instruction Idref on the basis of the deviation between the efficient voltage limit value Vlimit and the voltage instruction value V1.

Here, as described above, arrangement of the increase/decrease characteristic and the minimum value of the input power Pin with respect to the change of the phase angle changes in accordance with the change of the output of the motor M. In the example of this embodiment, the voltage limit value generation part 12 includes a voltage limit value map therein and generates the appropriate efficient voltage limit value Vlimit by referring to the voltage limit value map. The voltage limit value map in this example takes the orthogonal coordinates by two parameters, that is, the torque T related to the motor output (substituted by the torque instruction Tref) and the motor rotation speed N (= motor rotation speed ω) and constitutes the voltage limit value map by a two-dimensional table storing the efficient voltage limit value Vlimit at which the input power Pin can be made the minimum value (the power conversion efficiency η is substantially the maximum) corresponding to the combination of the two parameters (not particularly shown). Such efficient voltage limit value Vlimit obtained from the voltage limit value map using the torque T and the motor rotation speed N as key variables is generated by a value lower than the saturated voltage limit value Vpn. The torque instruction Tref and the motor rotation speed ω in the example of this embodiment correspond to a first parameter group described in each claim.

As a result, the voltage instruction value V1 controlling the input voltage into the motor M is stably maintained to the efficient voltage limit value Vlimit by the constant output control. That is, the input voltage V1 into the motor M in the high-speed rotation is maintained to the efficient voltage limit value Vlimit at which the power conversion efficiency η becomes substantially the maximum corresponding to the drive characteristic of the motor M to be driven at all times. At this time, even if a characteristic error due to a manufacture error of the motor M or caused by an actual operation as described above occurs, the input voltage V1 is maintained by the constant output control to the efficient voltage limit value Vlimit lower than the saturated voltage limit value Vpn at all times in this embodiment and thus, the d-axis current Id does not deviate from the drivable range.

### <Effect obtained from first embodiment>

According to the first embodiment described above, the following effects can be obtained. That is, in the motor controller 1 in this embodiment, the voltage instruction value V1 controlling the input voltage V1 into the motor M is stably maintained to the efficient voltage limit value Vlimit by the subtractor 15, the voltage limit part 13, and the adder 14. That is, the input voltage V1 into the motor M in the high-speed rotation is maintained to the efficient voltage limit value Vlimit at all times. This efficient voltage limit value Vlimit is the voltage value at which the power conversion efficiency η becomes substantially the maximum corresponding to the drive characteristic of the motor M to be driven and thus, the motor M can be stably driven with high efficiency even in high-speed rotation. Moreover, even if the characteristic error due to the manufacture error of the motor M or caused by the actual operation occurs, the input voltage V1 is maintained to the efficient voltage limit value Vlimit lower than the saturated voltage limit value Vpn at all times and thus, the d-axis current Id does not deviate from the drivable range.

Moreover, the power conversion efficiency η (minimum value of the input power Pin) fluctuates by being largely affected by the parameters related to the output of the motor M such as a motor detection speed, the speed instruction, and the torque instruction Tref, for example, and their relationships become largely different in the drive characteristic (mechanical characteristic, electric characteristic) of the motor M in use. Furthermore, the relationship between the power conversion efficiency η and the parameter is a complicated relationship not falling under a simple calculation formula in many cases. Thus, particularly in this embodiment, the voltage limit value generation part 12 generates the efficient voltage limit value Vlimit on the basis of a voltage limit value map storing a correlation between at least one parameter group (detection speed, speed instruction, torque instruction Tref and the like) related to the output of the motor M and the efficient voltage limit value Vlimit at which the power conversion efficiency η becomes substantially the maximum corresponding to this parameter group. As a result, the efficient voltage limit value Vlimit at which the power conversion efficiency η becomes substantially the maximum corresponding to the respective values of the parameter group can be generated rapidly and accurately.

Moreover, particularly in this embodiment, the parameter group used in the voltage limit value map includes the value of the torque instruction Tref and the motor rotation speed N. As a result, the torque and the rotation speed of the motor M by which the power conversion efficiency η is particularly affected are made to constitute the parameter group and thus, the efficient voltage limit value Vlimit can be generated appropriately.

In the first embodiment, the voltage limit value generation part 12 generates the efficient voltage limit value Vlimit by the map control using the voltage limit value map, but this is not limiting. As described above, the power conversion efficiency η can be calculated by the calculation formula (Pout/Pin) including the input voltage V1. Thus, if the relationship between the power conversion efficiency η and the parameter group related to the motor output can be approximated by a predetermined calculation formula, the efficient voltage limit value Vlimit at which the power conversion efficiency η becomes substantially the maximum may be also calculated by the calculation formula using the parameter group. In this case, since there is no need to provide the voltage limit value map, a storage capacity in a storage device and the like can be saved.

The disclosed embodiment is not limited to the above but is capable of various variations within a range not departing from the gist and the technical idea thereof. Such variations will be explained below.

### <Second embodiment>

The constant output control based on the above-described efficient voltage limit value Vlimit is particularly suitable for the driving control of the variable field motor capable of variable control of a field ratio. In this embodiment, an application example in which the variable field motor is a control target will be explained. The field ratio in the following refers to a ratio (a range of a value is 0 to 100%) of an induced voltage constant in relative rotation with respect to an induced voltage constant when an interlinkage magnetic flux becomes the maximum.

### <Outline of variable field motor>

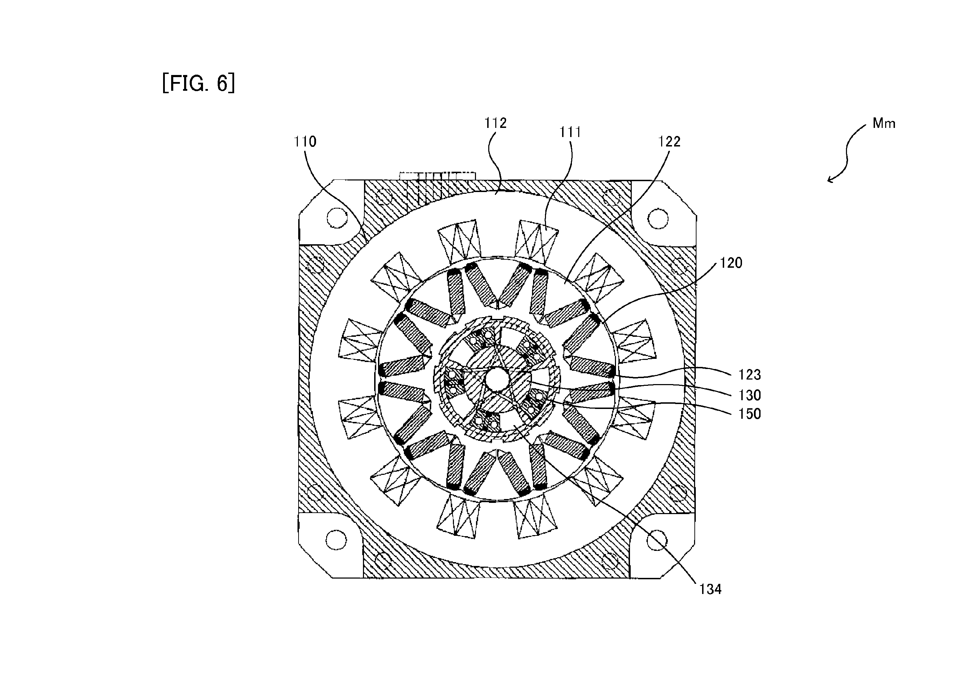

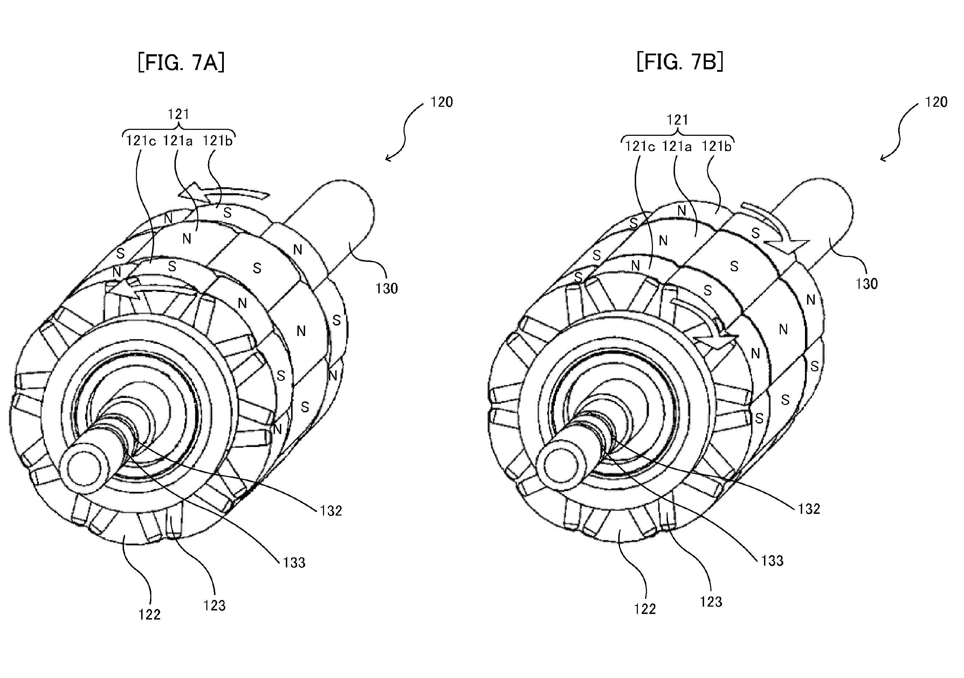

Frist, an outline of the variable field motor will be explained. Fig. 6 illustrates a section orthogonal to an axis in one example of a variable field motor Mm and Figs. 7A and 7B illustrate only a rotor in perspective. The variable field motor Mm in this example is constituted by a three-phase AC motor and includes a hydraulic driving mechanism therein. The variable field motor Mm has a stator 110 and a rotor 120 supported rotatably with respect to the stator 110, and rotation of the rotor 120 with respect to the stator 110 rotates a shaft 130 connected to the rotor 120 and outputs a rotary force.

The stator 110 includes windings 111 constituted by an air core coil and an iron core 112 and is constituted as an armature.

The rotor 120 includes a magnetic pole part 121 generating a magnetic field and an iron core 122 and is constituted as a field system.

The magnetic pole part 121 is divided into three parts in an axial direction, and a load-side magnetic pole part 121b and a counter-load side magnetic pole part 121c are made relatively rotatable with respect to a magnetic pole part 121a at the center, fixed to an outer periphery of a shaft 130. Each of the magnetic pole parts 121a, 121b, 121c is constituted by attaching a magnet 123 generating a magnetic field to an attachment hole having a substantial V-shape provided on the iron core 122 with a magnetizing direction as a facing surface or a rear surface.

To the variable field motor Mm, a field adjustment mechanism 17 which will be described later is connected, and a hydraulic control part, not particularly shown, is disposed therein. This hydraulic control part supplies a hydraulic pressure to a hydraulic chamber 134 disposed in the shaft 130 through a magnetizing-side oil inlet path 132 and a demagnetizing-side oil inlet path 133 disposed in the shaft 130. As a result, the hydraulic control part moves a movable pressure-receiving plate 150 attached to the hydraulic chamber 134 in a circumferential direction and relatively rotates the load-side magnetic pole part 121b and the counter-load side magnetic pole part 121c integrally fixed to the pressure-receiving plate 150 with respect to the magnetic pole part 121a at the center, whereby the interlinkage magnetic flux interlinking between the stator 110 and the rotor 120 is changed. The hydraulic driving mechanism disposed inside the variable field motor Mm includes the above-described magnetizing-side oil inlet path 132, the demagnetizing-side oil inlet path 133, the hydraulic chamber 134, the pressure-receiving plate 150 and the like. That is, the hydraulic driving mechanism changes the interlinkage magnetic flux by mechanical adjustment of the rotor 120 such that the load-side magnetic pole part 121b and the counter-load side magnetic pole part 121c are relatively rotated with respect to the magnetic pole part 121a at the center by supplying the hydraulic pressure to the hydraulic chamber 134 by control of the hydraulic control part of the field adjustment mechanism 17.

That is, if the interlinkage magnetic flux is to be weakened, a high-pressure oil is introduced from the demagnetizing-side oil inlet path 133 to the hydraulic chamber 134 by control of the hydraulic control part, and the pressure-receiving plate 150 is moved to one side in the circumferential direction so that the relative angles of the load-side magnetic pole part 121b and the counter-load side magnetic pole part 121c with respect to the magnetic pole part 121a at the center are increased. In a state illustrated in Fig. 7A, the load-side magnetic pole part 121b and the counter-load side magnetic pole part 121c are rotated relatively largely with respect to the magnetic pole part 121a at the center, and the magnetic poles offset each other, whereby the interlinkage magnetic flux is weakened.

On the other hand, if the interlinkage magnetic flux is to be strengthened, the high-pressure oil is introduced from the magnetizing-side oil inlet path 132 to the hydraulic chamber 134 by control of the hydraulic control part, and the pressure-receiving plate 150 is moved to the other side in the circumferential direction so that the relative angles of the load-side magnetic pole part 121b and the counter-load side magnetic pole part 121c with respect to the magnetic pole part 121a at the center are decreased. In a state illustrated in Fig. 7B, the load-side magnetic pole part 121b and the counter-load side magnetic pole part 121c have the magnetic poles aligned with the magnetic pole part 121a at the center, and the interlinkage magnetic flux becomes the strongest.

### <Configuration and features of second embodiment>

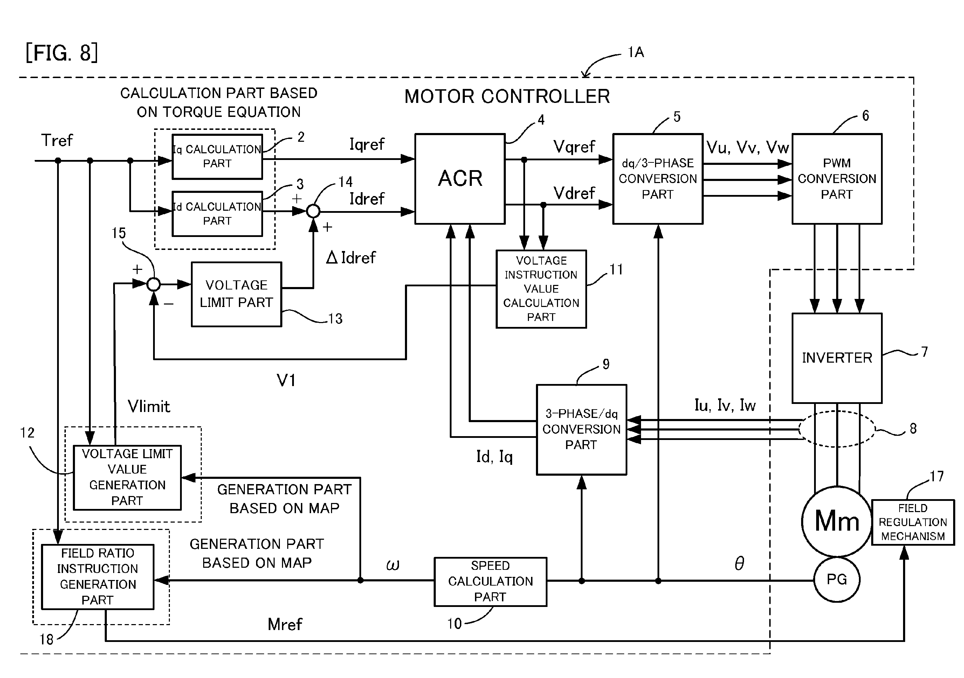

A functional block diagram of the motor controller of this embodiment having the variable field motor Mm as above as a driving target is illustrated in Fig. 8. A motor controller 1A illustrated in Fig. 8 is different from the motor controller 1 of the first embodiment illustrated in Fig. 1 in a point that the variable field motor Mm includes a field adjustment mechanism 17 and further includes a field ratio instruction generation part 18 outputting a field ratio instruction Mref to the field adjustment mechanism 17 on the basis of the torque instruction Tref and the motor rotation speed ω.

The field adjustment mechanism 17 controls the hydraulic control part on the basis of the field ratio instruction Mref and adjusts the field ratio in the variable field motor Mm. The field ratio is a ratio of an induced voltage constant in a state in which the load-side magnetic pole part 121b and the counter-load side magnetic pole part 121c have been rotated relatively to the magnetic pole part 121a at the center. In a state in which the field ratio is high, the motor Mm can easily generate a torque, while in a state in which the field ratio is low, the motor Mm can easily obtain the motor rotation speed ω. However, when the hydraulic driving mechanism changes the interlinkage magnetic flux by a mechanic operation, a relatively long time is needed until completion of the magnetic flux change and thus, a large response delay is caused with respect to the output of the field ratio instruction Mref. While the interlinkage magnetic flux is being changed as above, the motor constant keeps on changing continuously, that is, it is equal to a state in which an error keeps on occurring in the electric characteristic.

In such variable field motor Mm, the power conversion efficiency η can be positively fluctuated by changing the field ratio instruction Mref, but before that, the power conversion efficiency η itself (the minimum value of the input power Pin) changes passively in accordance with the motor output. The relationship between them is complicated not falling under a simple calculation formula in many cases. Thus, in the motor controller 1A of this embodiment, the field ratio instruction generation part 18 includes a field ratio map therein and generates the appropriate field ratio instruction Mref by referring to the field ratio map. This field ratio map uses the parameters related to the motor output as key variables and stores a correlation with the field ratio at which the input power Pin can be made the minimum value corresponding to the parameters. As a specific example in this embodiment, the orthogonal coordinates are taken by the two parameters, that is, the torque T (substituted by the torque instruction Tref) and the motor rotation speed N (= motor rotation speed ω), and the field ratio map is constituted by a two-dimensional table (not particularly shown) storing the field ratio instruction Mref at which the input power Pin can be made the minimum value corresponding to the combination of the two parameters. The torque instruction Tref and the motor rotation speed ω in the example of this embodiment correspond to the second parameter group described in each claim.

### <Effect obtained by second embodiment>

According to the second embodiment explained above, the following effects are obtained. That is, the motor controller 1A of this embodiment includes the field ratio instruction generation part 18 which generates the field ratio instruction Mref on the basis of the field ratio map storing a correlation between at least one parameter related to the output of the motor Mm such as the motor detection speed, the speed instruction, the torque instruction Tref and the like and the field ratio of the motor Mm at which the power conversion efficiency η becomes substantially the maximum corresponding to this parameter and outputs the field ratio instruction Mref to the field ratio adjustment mechanism 17 of the motor Mm. As a result, if the motor to be driven is the variable field motor Mm, the field ratio instruction Mref realizing highly efficient driving in accordance with the parameters related to the output of the motor Mm can be instructed to the motor Mm.

Moreover, as described above, while the variable field motor Mm is changing the interlinkage magnetic flux by taking a relatively long time by a mechanical operation of the field ratio adjustment mechanism 17, it is equal to the state in which an error keeps on occurring in the electric characteristic. On the other hand, since the input voltage V1 is maintained to the efficient voltage limit value Vlimit lower than the saturated voltage limit value Vpn at all times in this embodiment, too, the d-axis current Id does not deviate from the drivable range. As a result, the motor controller 1A of this embodiment performing the constant output control is suitable for application to the variable field motor Mm.

Moreover, particularly in this embodiment, by constituting the parameter group of the field ratio map by the torque T and the motor rotation speed N of the motor Mm by which the field ratio is particularly affected, the field ratio instruction Mref can be generated appropriately.

A function for detecting an actual field ratio of the motor Mm at that point of time can be included in the field ratio adjustment mechanism 17 (field ratio detection part). In this case, if there is a difference not smaller than a predetermined value between the field ratio instruction Mref generated by the field ratio instruction generation part 18 and the actual field ratio detected by the field ratio adjustment mechanism 17, the voltage limit value generation part 12 may modify the efficient voltage limit value Vlimit so as to become larger than the voltage instruction value V1 in accordance with the difference (not shown). As a result, even if a large delay occurs in the field ratio control, the efficient voltage limit value Vlimit can be appropriately modified, and the constant output control can be performed smoothly and more favorably.

### <Third embodiment>

When the field ratio of the variable field motor Mm is changed, a torque constant Kt and inductances Lq and Ld of the variable field motor Mm are also changed. The Iq calculation part 2, the Id calculation part 3, and the ACR 4 in the motor controller 1 perform calculations by using the calculation formulas based on these parameters Kt, Lq, and Ld and thus, the actual field ratio at that point of time is preferably fed back.

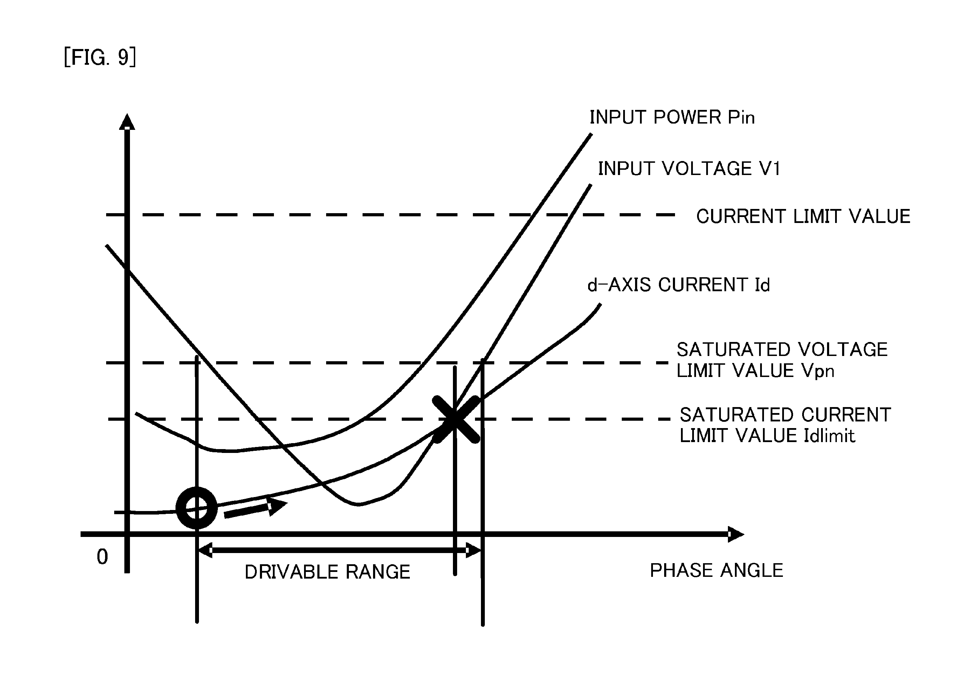

Moreover, as described above, if the d-axis current Id is increased exceeding a certain limit point of the phase angle (a change point on the substantially V-shaped curve), the input voltage V1 is monotonically increased. If an error is caused between the theoretical drive characteristic of the motor Mm in the voltage limit value map or the like and the actual drive characteristic of the motor Mm due to a temperature condition or the like, the input voltage V1 might be increased exceeding the above-described increase/decrease change point of the input voltage V1 when the d-axis current Id is increased by the constant output control. Thus, as illustrated in Fig. 9, it is preferable that the upper limit of the d-axis current Id is limited before the input voltage V1 exceeds the saturated voltage limit value Vpn, that is, within the drivable range.

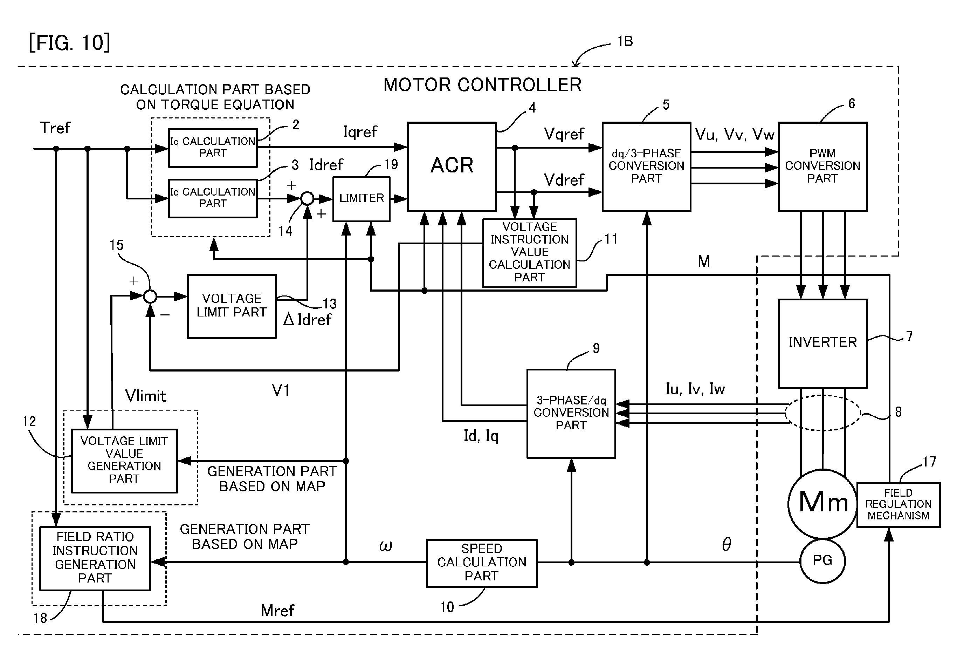

In order to realize the above-described two points, the third embodiment has a configuration as illustrated in Fig. 10. This motor controller 1B illustrated in Fig. 10 is different from the motor controller 1A of the second embodiment illustrated in Fig. 8 in a point that a limiter 19 is added to a transmission path of the d-axis current instruction Idref between the adder 14 and the ACR 4, the actual field ratio of the variable field motor Mm detected by the field adjustment mechanism 17 is inputted to the Iq calculation part 2, the Id calculation part 3, the limiter 19, and the ACR 4, and the motor rotation speed ω is also inputted into the limiter 19. The limiter 19 corresponds to the d-axis current limit part described in each claim.

According to the third embodiment described above, the following effects are obtained. That is, in the motor controller 1B of this embodiment, when the Iq calculation part 2, the Id calculation part 3, and the ACR 4 refer to the actual field ratio of the variable field motor Mm, more accurate calculation can be made and operation can be performed properly. If the field ratio adjustment mechanism 17 can change the interlinkage magnetic flux of the variable field motor Mm at a sufficient speed upon an input of the field ratio instruction Mref, the Iq calculation part 2, the Id calculation part 3, the limiter 19, and the ACR 4 may directly refer to the field ratio instruction Mref.

Moreover, particularly in this embodiment, when the limiter 19 refers to the actual field ratio and the motor rotation speed ω of the variable field motor, the upper limit of the d-axis current instruction Idref can be properly limited corresponding to a value within the range of the d-axis current Id in which the voltage instruction value V1 (input voltage VI) becomes lower than the saturated voltage limit value Vpn at which voltage saturation occurs in the motor Mm. As a result, even if the d-axis current instruction Idref is increased too much, since the limiter 19 limits the upper limit of the d-axis current instruction Idref within the drivable range, stable driving of the motor Mm can be ensured.

### <Fourth embodiment>

Moreover, though not particularly shown, the motor controller may include a voltage detection part for detecting a voltage between buses of the inverter 7, and the voltage limit value generation part 12 may generate the efficient voltage limit value Vlimit by referring to the voltage between the buses. Specifically, if the efficient voltage limit value Vlimit is higher than the maximum value of the output voltage of the inverter 7 calculated on the basis of the voltage between the buses, the voltage limit value generation part 12 changes the efficient voltage limit value Vlimit to the maximum value of the output voltage of the inverter 7. By configuring as above, even if the voltage between the buses of the inverter 7 is fluctuated, stable driving of the motor M can be ensured.

Moreover, other than those described above, methods of the above-described embodiments and each of the variations may be combined as appropriate for use.

Though not individually exemplified, the above-descried embodiments and each of the variations are put into practice with various changes added within a range not departing from the gist thereof.

## Claims

1. A motor controller (1; 1A; 1B) configured to control a driving of an AC motor (M; Mm), **characterized in that**:
the motor controller comprises:
a voltage calculation part (11) configured to calculate a voltage instruction value (V1);
a voltage limit value generation part (12) configured to generate a first voltage limit value (Vlimit) at which a power conversion efficiency (η) becomes substantially the maximum corresponding to a drive characteristic of the motor; and
a d-axis current adjustment part (13, 14, 15) configured to adjust a d-axis current on the basis of a deviation between the first voltage limit value (Vlimit) and the voltage instruction value (V1).

2. The motor controller (1) according to claim 1, wherein:
the voltage limit value generation part (12) is configured to generate the first voltage limit value (Vlimit) on the basis of a voltage limit value map storing a correlation between at least one first parameter group (Tref, ω) related to an output of the motor (M) and the first voltage limit value (Vlimit) at which the power conversion efficiency (η) becomes substantially the maximum corresponding to the first parameter group (Tref, ω).

3. The motor controller (1) according to claim 1, wherein:
the voltage limit value generation part (12) is configured to calculate the first voltage limit value (Vlimit) at which the power conversion efficiency (η) becomes substantially the maximum on the basis of a calculation formula using at least one first parameter group (Tref, ω) related to an output of the motor (M).

4. The motor controller according to claim 2 or 3, wherein:
the first parameter group includes a torque instruction value (Tref) and a motor rotation speed (ω).

5. The motor controller (1A; 1B) according to any one of claims 1 to 4, further comprising,
a field ratio instruction generation part (18) configured, in a case where the motor (Mm) is a motor capable of varying intensity of a magnetic flux emitted from a rotor, to generate and output a field ratio instruction (Mref) to the motor on the basis of a field ratio map storing a correlation between at least one second parameter group (Tref, ω) related to the output of the motor (Mm) and a field ratio of the motor (Mm) at which the power conversion efficiency (η) becomes substantially the maximum corresponding to the second parameter group (Tref, ω).

6. The motor controller (1A; 1B) according to claim 5, wherein:
the second parameter group includes a torque instruction value (Tref) and a motor rotation speed (ω).

7. The motor controller (1A) according to claim 5 or 6, further comprising,
a field ratio detection part configured to detect a field ratio in the motor (Mm), wherein
in a case where there is a difference not smaller than a predetermined value between the field ratio instruction (Mref) generated by the field ratio instruction generation part (18) and the field ratio detected by the field ratio detection part, the voltage limit value generation part (12) is configured to modify the first voltage limit value (Vlimit) so as to become larger than the voltage instruction value (V1) in accordance with the difference.

8. The motor controller (1; 1A; 1B) according to any one of claims 1 to 7, further comprising,
a d-axis current instruction limit part (19) configured to limit an upper limit of a d-axis current instruction corresponding to a value within a range of a d-axis current in which the voltage instruction value (V1) becomes lower than a second voltage limit value (Vpn) at which voltage saturation occurs in the motor (M; Mm).

9. The motor controller according to any one of claims 1 to 8, further comprising,
a voltage detection part configured to detect a voltage between buses of an inverter (7) configured to feed a drive power to the motor (M; Mm), wherein
the voltage limit value generation part (12) is configured, in a case where the first voltage limit value (Vlimit) is higher than a maximum value of an output voltage of the inverter (7) calculated on the basis of the voltage between the buses, to change the first voltage limit value (Vlimit) to the maximum value of the inverter output voltage.
